# EUROPÄISCHE PATENTSCHRIFT

(11) **EP 2 660 498 B1**
(45) Veröffentlichungstag und Bekanntmachung des Hinweises auf die Patenterteilung: **14.02.2018**
(21) Anmeldenummer: 13165464.2
(22) Anmeldetag: 26.04.2013
(51) Int. Cl.: F16L 19/02, F16L 19/04, F16L 19/06, F16L 19/10

(54) **Vorrichtung zur Festlegung eines Rohrs an einem Anschlussteil**
Apparatus for fixing a pipe to a connecting part
Dispositif de fixation d'un tube au niveau d'une pièce de raccordement

(30) Priorität: 03.05.2012 DE 102012103878
(43) Veröffentlichungstag der Anmeldung: 06.11.2013
(73) Patentinhaber: Schwer Fittings GmbH, 78588 Denkingen (DE)
(72) Erfinder: Kober, Heinrich, 78549 Spaichingen (DE)
(74) Vertreter: Patentanwälte und Rechtsanwalt Weiß, Arat & Partner mbB

(56) Entgegenhaltungen:
- WO-A1-2009/003015
- WO-A1-2009/018079
- WO-A1-2009/023505
- WO-A1-2011/091008
- GB-A- 379 413
- US-A- 4 438 959

## Beschreibung

Die Erfindung betrifft eine Vorrichtung nach dem Oberbegriff des Anspruchs 1.

### STAND DER TECHNIK

Aus dem Stand der Technik sind verschiedene Vorrichtungen bekannt und gebräuchlich. In diesem Zusammenhang wird auf die WO 2010/068762 A1 hingewiesen. Weiter wird auf die DE 43 43 005 C1 hingewiesen. Auch in diesen Vorrichtungen werden Rohre mit Anschlussteilen verbunden.

In diesem Zusammenhang wird auf die WO 2009/003015 A1 hingewiesen, welche eine Vorrichtung zum Verbinden zweier Rohre offenbart, wobei zwischen den beiden Rohren ein verformbares Dichtelement angeordnet ist, welches beim Verbinden der beiden Rohrenden den Zwischenraum abdichtet.

Weiter wird auf die WO 2011/091008 A1 hingewiesen, welche eine ähnliche Vorrichtung zeigt, bei der ein Keilring derart mit einer Überwurfscheibe zusammenwirkt, sodass er in eines der Rohre einschneidet.

Eine ähnliche Vorrichtung wird auch in der US 2009/023505 A1, der WO 2009/018079 A8 und der GB 379, 413 veröffentlicht.

### AUFGABE DER ERFINDUNG

Aufgabe der Erfindung ist es eine möglichste einfache Konstruktion zur Verfügung zu stellen, welche ein Rohr an einem Anschlussteil absolut sicher und dicht festlegt, ohne dass es dabei zu unnötigen Aufwand für den Nutzer kommen soll. Weiter soll die Konstruktion möglichst einfach gestaltet sein, um auf der einen Seite Kosten einzusparen und auf der anderen Seite womögliche Fehlerquellen bei der Anwendung auszuschliessen.

### LÖSUNG DER AUFGABE

Zur Lösung der Aufgabe führen die Merkmale des Anspruchs 1. In den Unteransprüchen sind vorteilhafte Weitergestaltungen benannt.

Eine erfindungsgemässe Vorrichtung zur Festlegung eines Rohrs an einem Anschlussteil ist derart gestaltet, dass das Rohr immer aus einem metallischen Werkstoff hergestellt ist. Hierbei ist es unbeachtlich, ob es sich beispielsweise um ein Kupfer-, Stahl- oder Aluminiumrohr handelt. Das Anschlussteil ist in der Regel ebenfalls aus einem metallenen Werkstoff hergestellt. Es ist auch denkbar, dass andere Werkstoffe in Betracht kommen, welche die gleiche Härte wie metallene Werkstoffe aufweisen. Gerade ein Metallrohr an einem Anschlussteile festzulegen führt regelmässig zu Schwierigkeiten, wenn eine absolute Dichtheit erreicht werden soll. Dies resultiert beispielsweise aus dem Umstand, dass die metallenen Werkstoffe nicht ausreichend flexibel sind, um sich aufeinander einzustellen und dadurch eine selbstdichtende Funktion zu erreichen.

Eine erfindungsgemässe Vorrichtung umfasst weiterhin eine Anziehmutter, welche auf das Anschlussteil aufschraubbar ist. Hierzu weist das Anschlussteil und die Anziehmutter jeweils miteinander korrespondierende Gewinde auf. Die Steigung der Gewinde, wie auch die Ausgestaltung der Länge des Gewindebereichs ist insoweit unbeschränkt, das es sich um die vom Nutzer bzw. Hersteller benötigten Angaben handelt.

Die Anziehmutter weist in der Regel eine Oberfläche auf, welche das Festschrauben oder Aufschrauben der Anziehmutter an dem Anschlussteil erleichtert. Die Oberfläche kann entweder derart gestaltet sein, dass sie manuell durch Armkraft oder durch Einsatz eines Schlüssels bzw. Werkzeugs erfolgen kann. Vorteilhaft hierbei ist eine einfache und sichere Verbindung der Anziehmutter mit dem Anschlussteil. Gewinde haben hierbei noch den Vorteil, dass sie möglichst gut justierbar sind.
Weiter weist die erfindungsgemässe Vorrichtung einen Klemmring und einen Keilring auf. Hierbei ist darauf zu achten, dass der Klemmring und der Keilring bei der Festlegung in Wirkverbindung stehen. Dies bedeutet im Einzelnen, dass der Keilring durch die Anziehmutter gegen den Klemmring geschoben wird, wobei die dabei entstehenden Kräfte zu einer festen Klemmung des Rohrs an dem Klemmring, welches wiederum im Innenraum zwischen dem Anschlussteil und der Anziehmutter gelagert ist, führen. Hierbei stützt sich der Klemmring einerseits gegen das Anschlussteil ab und andererseits wird es durch den Keilring gegen das Anschlussteil geschoben. Der Klemmring umfasst eine Einschnürung. Die Einschnürung ist derart gestaltet, dass ein Kragen vom restlichen Umfang des Klemmrings abragt.
Die Ausformung, sowie die Masse des Abragens richten sich hierbei nach den Innenraumverhältnissen der Anziehmutter. Bei der oben beschriebenen Wirkverbindung zwischen Klemmring und Keilring kommt es zu einer Verformung des Klemmrings in der Weise, dass die Einschnürung und der von der Einschnürung abragende Kragen hin zu der Innenfläche der Anziehmutter verschiebbar ist.
Hierdurch wird vorteilhaft erreicht, dass kein Überdrehen der Anziehmutter möglich ist, da der Kragen des Klemmrings an die Innenhaut der Anziehmutter anschlägt und ein weiteres Aufschrauben der Anziehmutter auf das Anschlussteil blockiert wird.
Der Kragen schlägt dabei auf die Innenseite der Anziehmutter an. In gleicher Weise wird im Bereich der Einschnürung der Klemmring gegen das im Klemmring teilweise aufgenommene Rohr gedrückt. Auch dies ist insoweit durch die Wirkverbindung zwischen dem Keilring und dem Klemmring erreichbar.

Die Wirkverbindung entsteht dadurch, dass der Keilring durch Aufschrauben der Anziehmutter auf das Anschlussteil erreicht wird. In dem Bereich, in dem das Rohr durch den Klemmring umfangen ist, findet folglich im Bereich der Einschnürung eine zusätzlich Klemmung des Rohrs statt. In diesem Zusammenhang wird darauf hingewiesen, dass der Keilring eine Schneidkante umfasst. Diese Schneidkante ist derart gestaltet, dass bei der oben beschriebenen Wirkverbindung und der Hinbewegung des Keilrings 3 zu dem Klemmring 4 durch das Aufschrauben der Anziehmutter auf das Anschlussteil, die Schneidkante in den Aussenumfang des Rohrs einschneidet. Durch dieses Einschneiden findet vorteilhaft eine weitere Klemmung statt.

Daneben ist der Klemmring konisch geformt. Die konische Formung ist derart gestaltet, dass beim Einschieben des Rohrs in den Klemmring ein Selbstjustieren und Zentrieren des Rohrs in dem Klemmring erfolgt. Auf diese Weise wird das Rohr an die gewünschte Position im Klemmring gebracht. Es hat den Vorteil, dass es an der gewünschten Position im Klemmring anliegt.

In dem bevorzugten Ausführungsbeispiel weist das Anschlussteil auf der dem Klemmring zugewandten Seite eine abflachende Form oder eine Fase auf. Der Klemmring wird an eine Stirnfläche des Anschlussteils angeschlagen. Dies erfolgt dadurch, dass die Anziehmutter den Keilring zu dem Klemmring hinverschiebt. Dabei wird der Klemmring an die Stirnfläche des Anschlussteils gedrückt, da das Anschlussteil und die Anziehmutter über ein gemeinsames Gewinde verfügen. Diese Stirnfläche des Anschlussteils ist hierbei als die Seite die dem Klemmring zugewandt ist, zu betrachten. Diese Stirnfläche ist abgeflacht ausgeführt. Dies wiederum bedeutet, dass es nur zu einem punktuellen vordefinierten Punkt zu einer Berührung des Anschlussteils mit dem Klemmring kommen soll. An dieser punktuellen Berührungsfläche entsteht eine metallische Dichtkante, wobei die Abdichtung durch Linienpressung erfolgt. Die Abflachung stellt sich vereinfacht als Kegelform dar. Vorteilhaft an dieser Abflachung ist eine metallische Dichtkante, die selbstdichtend funktioniert und dabei eine hohe Dichtungseigenschaft besitzt.
In einem erfindungsgemässen Ausführungsbeispiel weist der Keilring eine Nasenverjüngung auf. Diese Nasenverjüngung ist eine Innenschräge des Klemmrings einschiebbar. Die Nasenverjüngung ist dabei derart gestaltet, dass auf der der Innenschräge abgewandten Seite der Nasenverjüngung die Schneidkante ausgebildet ist. Vorteilhaft hierbei ist der Umstand, dass durch das Eingleiten der Nasenverjüngung in die Innenschräge des Klemmrings eine fehlerfrei funktionierende Wirkung erzielt wird.
Ein anderes Ausführungsbeispiel eines erfindungsgemässen Anschlussteils umfasst einen Dichtungsring. Der Dichtungsring ist wieder auf der dem Klemmring zugewandten Seite des Anschlussteils eingebracht. Es handelt sich hierbei wiederum um die Stirnfläche des Anschlussteils, an das der Klemmring anschlägt, während der Klemmring durch den Keilring zum Anschlussteil hin gedrückt wird. Durch den zusätzlichen Dichtungsring wird vorteilhaft erreicht, dass neben der metallischen Dichtung eine zusätzlich Dichtung durch den O-Ring erzielt wird. Es handelt sich hierbei um eine vorteilhafte Ausgestaltung, da eine grössere Sicherheit erreicht wird.
Der erfindungsgemässe Kragen, welcher durch die Einschnürung des Klemmrings entsteht, ist derart gestaltet, dass durch ein Zusammenwirken mit dem Keilring der Klemmring und insbesondere der Kragen zu einem Innenumfang der Anziehmuter in Kontakt bringbar ist. Dies bedeutet, dass beim Aufschrauben der Anziehmutter auf das Anschlussteil der Keilring gegen den Klemmring drückt, welcher wiederum gegen das Anschlussteil drückt. Bei dieser Zusammenwirkung von Keilring und Klemmring spreizt sich der Kragen von dem Rohr ab, welches teilweise durch den Klemmring umfangen ist. Dabei schlägt der Kragen an den Innenumfang der Anziehmutter. Dadurch wird erreicht, dass zum einen in dem Bereich der Einschnürung eine zusätzliche Klemmkraft auf das Rohr entsteht und zum anderen im Bereich der Kontaktfläche des Kragens mit dem Innenumfang der Anziehmutter eine Sicherung vor Überdrehung der Anziehmutter entsteht.

### FIGURENBESCHREIBUNG

Weitere Vorteile, Merkmale und Ausgestaltungen finden sich in der nachfolgenden Figurenbeschreibung. IN der Figurenbeschreibung im Einzelnen in:
**Figur 1** eine geschnittene Teilansicht eines Bereichs der erfindungsgemässen Vorrichtung;
**Figur 2** eine geschnittene Seitenansicht eines erfindungsgemässen Keilrings;
**Figur 3** eine vergrössert dargestellte Seitenansicht des Bereichs aus Figur 2;
**Figur 4** eine geschnittene Seitenansicht eines erfindungsgemässen Klemmrings;
**Figur 5** eine geschnittene Seitenansicht eines erfindungsgemässen Anschlussteils;
**Figur 6** eine geschnittene Seitenansicht eines weiteren Ausführungsbeispiels einer erfindungsgemässen Vorrichtung.

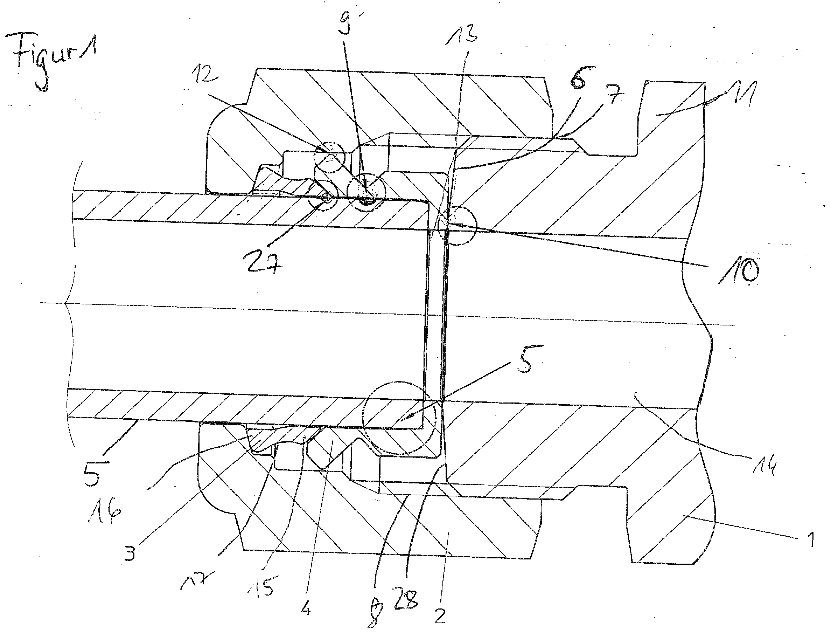

In Figur 1 ist ein Anschlussteil 1 gezeigt. Dieses Anschlussteil 1 weist einen Gewindeabschnitt 7 und eine Schulter 11 auf. Ausserdem ist ein Durchlass 14 aufgezeigt. Daneben ist in Figur 1 ein Rohr 5 zu erkennen, welches in einen Klemmring 4 eingefügt dargestellt ist. Weiterhin ist ein Keilring 3 gezeigt, welcher mit einem Kragen 12 zusammenwirkt.

Der Keilring 3 besteht einends im Wesentlichen aus einer Nasenverjüngung 15 und andernends aus einer Anschlagschräge 16, wobei die Nasenverjüngung 15 und die Anschlagschräge 16 durch einen Steg 17 miteinander verbunden sind.

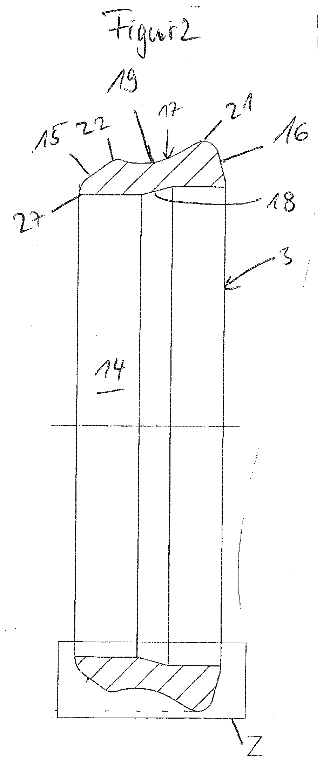

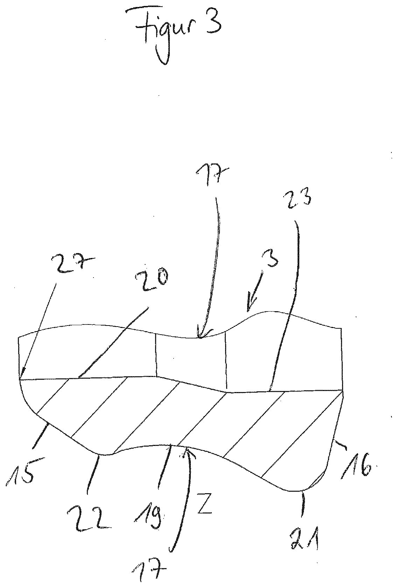

Im Einzelnen ist der Keilring 3 nochmals in den Figuren 2 und 3 beschrieben. Dort ist gezeigt, dass der Steg 17 innwändig einen Absatz 18 und andernseitig eine konkave Einbuchtung 19. Innwändig bedeutet hierbei der Bereich des Keilrings 3 welcher zur Aufnahme des Rohrs 5 geeignet ist, wobei der Keilring 3 über den Aussenumfang des Rohrs 5 schiebbar ist. Der Absatz 18 ist derart gestaltet, alsdass der Innenumfang des Bereichs der Nasenverjüngung 15 einen kleineren Umfang aufweist als der Innenumfang des Bereichs der Anschlagschräge 16.

Ausserdem ist in Figur 2 ein Bereich Z gezeigt, welcher in Figur 3 vergrössert dargestellt ist. Dort ist nun gut zu erkennen, wie die Nasenverjüngung 15 innwändig eine Anliegefläche 20 ausbildet. Die Anliegefläche 20 ist geeignet zum Anliegen auf der Aussenhaut des Rohrs 5. Die Anliegefläche 20 schliesst einends an den Absatz 18 an. Andernends des Absatzes 18 umfasst der Keilring 3 eine Plankante 23. Die Plankante 23 geht über einen Winkel von unter 90° über in die Anschlagschräge 16. Dabei ist die Anschlagschräge 16 derart gestaltet, dass sie über eine erste Wölbung 21 in die konkave Einbuchtung 19 übergeht. An die konkave Einbuchtung 19 schliesst eine zweite Wölbung 22 an, wobei die zweite Wölbung 22 in die Nasenverjüngung 15 übergeht. Die Nasenverjüngung 15 wiederum geht zunächst spitzwinklig und dann fast rechtwinklig in die Anliegefläche 20 über.

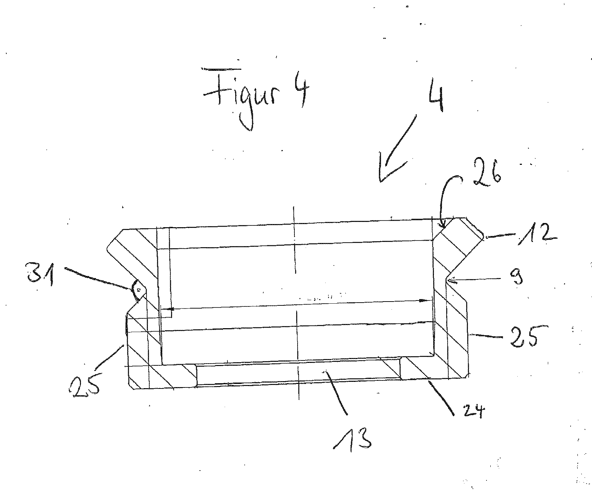

Figur 4 zeigt eine vergrösserte geschnittene Seitenansicht des Klemmrings 4 aus Figur 1. Der Klemmring 4 weist eine Bodenplatte 24 auf. Die Öffnung 13 ist in die Bodenplatte 24 eingelassen. Ausserdem umfasst der Klemmring 4 eine Umfangswandung 25. Die Umfangswandung 25 ist konisch von der Bodenplatte 24 abragend ausgebildet. Ausserdem weist die Umfangswandung 25 die Einschnürung 9 auf, welche zum Abragen eines Teils der Umfangswandung 25 in Form des Kragens 12 führt. Der Kragen 12 ragt dabei über den restliche Umfang des Klemmrings 4 ab. Die Bodenplatte 24 ist in diesem Ausführungsbeispiel plan gestaltet. Das Verhältnis der Öffnung 13 und der Bodenplatte 24 zueinander ist derart gestaltet, dass das Rohr 5 in den Klemmring 4 hineingeschoben wird und durch die konische Form des Klemmrings 4 zentriert wird. Die Einschnürung 9 ist etwa mittig in der Länge der Umfangswandung 25 vorhanden. Daneben ist in Figur 4 eine Innenschräge 2 gezeigt. Die Innenschräge 26 ist derart gestaltet, alsdass die Nasenverjüngung 15 mit der Innenschräge 26 zusammenwirkt. Dazu schiebt sich die Nasenverjüngung 15 über die Innenschräge 26 hin zu der Öffnung 13.

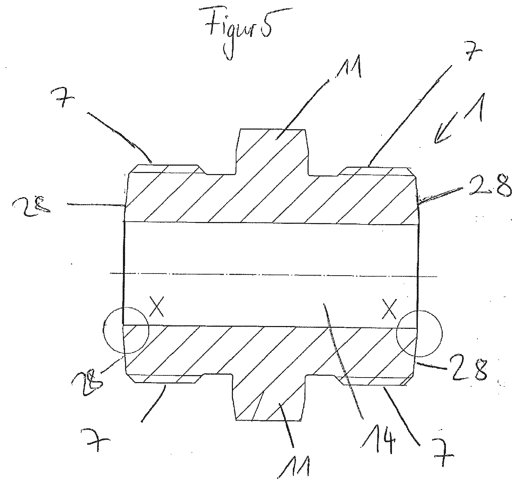

In Figur 5 ist das Anschlussteil 1 aus Figur 1 nochmals vollständig gezeigt. Dort ist besser zu erkennen, dass das Anschlussteil 1 die umlaufende Schulter 11 und zwei umlaufende Gewinde 7 aufweist. Weiterhin ist der Durchlass 14 nochmals gut zu erkennen. Daneben wird auf eine Stirnfläche 28 hingewiesen. Die Stirnfläche 28 befindet sich jeweils zwischen dem Auslassbereich des Durchlasses 14 und dem Gewinde 7.

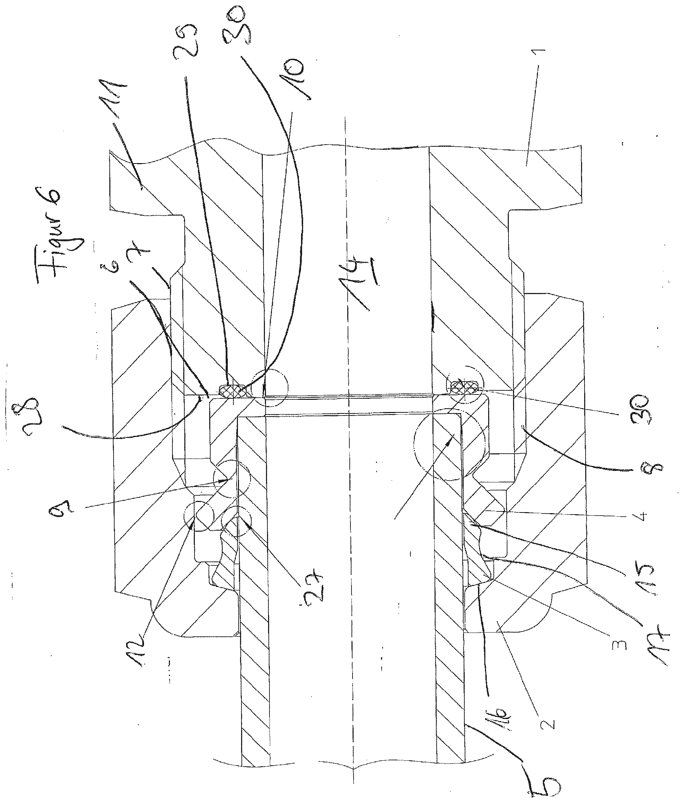

In Figur 6 sind im Wesentlichen nochmals die gleichen Merkmale genannt, wie die bereits in Figur 1 gezeigten Merkmale. Daher wird hier auf die nochmalige Aufzählung aller Merkmale, welche bereits aus der Figur 1 bekannt sind, verzichtet. Es wird lediglich darauf hingewiesen, dass die mit den gleichen Bezugsziffern versehenen Teile aus Figur 6 die gleiche Offenbarung inne haben sollen, wie sie für die Figur 1 bereits getroffen wurden. Dies soll für alle in der Figurenbeschreibung angesprochenen Merkmale gelten, und zwar unabhängig davon zu welcher Figur welches Merkmal beschrieben wurde, solange das Merkmal auch in anderen Figuren mit der geleichen Bezugsziffer benannt sind, soll die Offenbarung der einen Figur auch für die anderen Figuren gelten. Neben den bereits beschriebenen Merkmalen findet sich in der Figur 6 eine Einlassung 29 in der Stirnfläche 28 des Anschlussteils 1. In der Einlassung 29 wiederum ist ein Dichtring 30 gezeigt. Dieser Dichtring 30 dient der zusätzlichen Dichtung zwischen dem Anschlussteil 1 und dem Rohr 5. Daneben ist eine metallische Dichtkante 10 zu erkennen, welche durch das Aufdrücken des Klemmrings 4 auf die Stirnfläche 28 des Anschlussteils 1 entsteht.

**Bezugszeichenliste**

| | | | | | |
|---|---|---|---|---|---|
| 1 | Anschlussteil | 34 | | 67 | |
| 2 | Anziehmutter | 35 | | 68 | |
| 3 | Keilring | 36 | | 69 | |
| 4 | Klemmring | 37 | | 70 | |
| 5 | Rohr | 38 | | 71 | |
| 6 | Fase | 39 | | 72 | |
| 7 | Gewindeabschnitt | 40 | | 73 | |
| 8 | Gegengewinde | 41 | | 74 | |
| 9 | Einschnürung | 42 | | 75 | |
| 10 | Dichtkante | 43 | | 76 | |
| 11 | Schulter | 44 | | 77 | |
| 12 | Kragen | 45 | | 78 | |
| 13 | Öffnung | 46 | | 79 | |
| 14 | Durchlasse | 47 | | | |
| 15 | Nasenverjüngung | 48 | | | |
| 16 | Anschlagsschräge | 49 | | | |
| 17 | Steg | 50 | | | |
| 18 | Absatz | 51 | | | |
| 19 | Einbuchtung | 52 | | | |
| 20 | Anliegefläche | 53 | | | |
| 21 | erste Wölbung | 54 | | | |
| 22 | zweite Wölbung | 55 | | | |
| 23 | Plankante | 56 | | | |
| 24 | Bodenplatte | 57 | | | |
| 25 | Umfangswandung | 58 | | | |
| 26 | Innenschräre | 59 | | | |
| 27 | Schneidkante | 60 | | | |
| 28 | Stirnfläche | 61 | | | |
| 29 | Einlassung | 62 | | | |
| 30 | Dichtring | 63 | | | |
| 31 | | 64 | | | |
| 32 | | 65 | | | |
| 33 | | 66 | | | |

## Patentansprüche

1. Vorrichtung zur Festlegung eines Rohrs (5) an einem Anschlussteil (1)
- mit einer Anziehmutter (2), welche auf das Anschlussteil (1) aufschraubbar ist,
- mit einem Klemmring (4) und einem Keilring (3),
**dadurch gekennzeichnet,**
**dass** der Klemmring (4) eine Einschnürung (9) umfasst, wobei der Klemmring (4) eine Bodenplatte (24) aufweist, wobei eine Öffnung (13) in die Bodenplatte (24) eingelassen ist und der Klemmring (4) umfasst eine Umfangswandung (25), wobei die Umfangswandung (25) konisch von der Bodenplatte (24) abragend ausgebildet ist, wobei die Umfangswandung (25) die Einschnürung (9) aufweist, welche zum Abragen eines Teils der Umfangswandung (25) in Form des Kragens (12) führt, wobei der Kragen (12) dabei über den restliche Umfang des Klemmrings (4) abragt, wobei das Verhältnis der Öffnung (13) und der Bodenplatte (24) zueinander derart gestaltet ist, dass das Rohr (5) in den Klemmring (4) hineingeschoben ist und durch die konische Form des Klemmrings (4) zentriert ist, wobei die Einschnürung (9) etwa mittig in der Länge der Umfangswandung (25) vorhanden ist.

2. Vorrichtung nach Anspruch 1, **dadurch gekennzeichnet, dass** der Keilring (3) eine Schneidkante (27) umfasst, welche geeignet ist in den Aussenumfang des Rohrs (5) einzugreifen.

3. Vorrichtung nach einem der vorigen Ansprüche, **dadurch gekennzeichnet, dass** das Rohr (5) teilweise von dem Klemmring (4) umfangen ist.

4. Vorrichtung nach einem der vorigen Ansprüche, **dadurch gekennzeichnet, dass** das Anschlussteil (1) auf dem Klemmring (4) zugewandte Seite eine abflachende Form (6) aufweist.

5. Vorrichtung nach einem der vorigen Ansprüche, **dadurch gekennzeichnet, dass** der Keilring (3) eine Nasenverjüngung (15) aufweist, welche in eine Innenschräge (26) des Klemmrings (4) einschiebbar ist.

6. Vorrichtung nach einem der vorigen Ansprüche, **dadurch gekennzeichnet, dass** das Anschlussteil (1) einen Dichtring (30), welcher auf der dem Klemmring (4) zugewandten Seite eingebracht ist.

7. Vorrichtung nach einem der vorigen Ansprüche, **dadurch gekennzeichnet, dass** ein Kragen (12) des Klemmrings (4) durch Zusammenwirken mit dem Keilring (3) zu einem Innenumfang der Anziehmutter (2) in Kontakt bringbar ist.

8. Vorrichtung nach einem der vorigen Ansprüche, **dadurch gekennzeichnet, dass** der Keilring (3) durch die Anziehmutter (2) zu dem Klemmring (4) verschiebbar ist.

## Claims

1. Apparatus for fixing a pipe (5) to a connecting part (1)
- comprising a tightening nut (2) which can be screwed onto the connecting part (1),
- comprising a clamping ring (4) and a wedge ring (3),
**characterized in that**
the clamping ring (4) comprises a waist (9), wherein the clamping ring (4) comprises a base plate (24), wherein an opening (13) is formed in the base plate (24) and the clamping ring (4) comprises a circumferential wall (25), wherein the circumferential wall (25) is designed to protrude conically from the base plate (24), wherein the circumferential wall (25) has the waist (9) which leads to a portion of the circumferential wall (25) protruding in the form of the collar (12), wherein the collar (12) protrudes beyond the rest of the circumference of the clamping ring (4), wherein the ratio of the opening (13) and the base plate (24) relative to one another is such that the pipe (5) is pushed into the clamping ring (4) and is centred by the conical shape of the clamping ring (4), wherein the waist (9) is provided approximately centrally in the length of the circumferential wall (25).

2. Apparatus according to claim 1, **characterized in that** the wedge ring (3) comprises a cutting edge (27) which is suitable for gripping into the outer circumference of the pipe (5).

3. Apparatus according to one of the preceding claims, **characterized in that** the pipe (5) is partially surrounded by the clamping ring (4).

4. Apparatus according to one of the preceding claims, **characterized in that** the connecting part (1) has a flattened shape (6) on the side facing towards the clamping ring (4).

5. Apparatus according to one of the preceding claims, **characterized in that** the wedge ring (3) has a nose taper (15) which can be pushed into an inner bevel (26) of the clamping ring (4).

6. Apparatus according to one of the preceding claims, **characterized in that** the connecting part (1) a sealing ring (30) which is inserted on the side facing towards the clamping ring (4).

7. Apparatus according to one of the preceding claims, **characterized in that** a collar (12) of the clamping ring (4), through collaboration with the wedge ring (3), can be brought into contact with an inner circumference of the tightening nut (2).

8. Apparatus according to one of the preceding claims, **characterized in that** the wedge ring (3) is displaceable relative to the clamping ring (4) by means of the tightening nut (2).

## Revendications

1. Dispositif de fixation d'un tuyau (5) à une pièce de raccordement (1)
- avec un écrou de serrage (2) qui peut être vissé sur la pièce de raccordement (1),
- avec une bague de serrage (4) et une bague en forme de coin (3),
**caractérisé par le fait**
**que** la bague de serrage (4) comprend un rétrécissement (9), dans lequel la bague de serrage (4) présente une plaque de fond (24), dans lequel une ouverture (13) est réalisée dans la plaque de fond (24) et la bague de serrage (4) comporte une paroi périphérique (25), dans lequel la paroi périphérique (25) est réalisée de manière à faire saillie en s'effilant de la plaque de fond 24), dans lequel la paroi périphérique (25) présente le rétrécissement (9) qui résulte, pour la saillie d'une partie de la paroi périphérique (25), en la forme de collerette (12), la collerette (12) faisant saillie par rapport à la périphérie restante de la bague de serrage (4), dans lequel le rapport entre l'ouverture (13) et la plaque de fond (24) est réalisé de sorte que le tube (5) soit enfoncé dans la bague de serrage (4) et soit centré par la forme conique de la bague de serrage (4), dans lequel le rétrécissement (9) est présent environ au centre de la longueur de la paroi périphérique (25).

2. Dispositif selon la revendication 1, **caractérisé par le fait que** la bague en forme de coin (3) comporte un bord tranchant (27) qui convient pour s'engager dans la périphérie extérieure du tube (5).

3. Dispositif selon l'une des revendications précédentes, **caractérisé par le fait que** le tube (5) est partiellement entouré par la bague de serrage (4).

4. Dispositif selon l'une des revendications précédentes, **caractérisé par le fait que** la pièce de raccordement (1) présente, du côté orienté vers la bague de serrage (4), une forme qui va en s'aplanissant (6).

5. Dispositif selon l'une des revendications précédentes, **caractérisé par le fait que** la bague en forme de coin (3) présente un nez effilé (15) qui peut être introduit dans un chanfrein intérieur (26) de la bague de serrage (4).

6. Dispositif selon l'une des revendications précédentes, **caractérisé par le fait que** la pièce de raccordement (1) comporte une bague d'étanchéité (30) qui est placée du côté orienté vers la bague de serrage (4).

7. Dispositif selon l'une des revendications précédentes, **caractérisé par le fait qu'**une collerette (12) de la bague de serrage (4) peut, par coopération avec la bague en forme de coin (3), être amenée en contact avec une périphérie intérieure de l'écrou de serrage (2).

8. Dispositif selon l'une des revendications précédentes, **caractérisé par le fait que** la bague en forme de coin (3) peut être déplacée vers la bague de serrage (4) par l'écrou de serrage (2).
